# EUROPEAN PATENT APPLICATION

(11) **EP 4 365 257 A1**
(43) Date of publication of application: **08.05.2024**
(21) Application number: 23206640.7
(22) Date of filing: 30.10.2023
(51) Int. Cl.: C09J 133/06, C09D 133/06

(54) **A COATING COMPOSITION, A METHOD FOR PRODUCING A CURED COATING, AND AN ARTICLE COMPRISING A CURED COATING**

(30) Priority: 02.11.2022 US 202218052079
(71) Applicant: Axalta Coating Systems GmbH, 4057 Basel (CH)
(72) Inventor: Yokoyama, Ayumu, Wallingford (US); Trindade, Delson, Wilmington (US); Huang, Yongqing, Hockessin (US); Wen, Mei, Chesterbrook (US); Chanpuriya, Siddharth, Philadelphia (US)
(74) Representative: LKGlobal UK Ltd.

(57) **Abstract**

Coating compositions, methods of producing a cured coating, and articles coated with a cured coating are provided. In an exemplary embodiment, a coating composition includes a crosslinking agent, an acrylic resin, a catalyst, and a catalyst blocker that blocks the catalyst. The crosslinking agent includes an alkylated melamine, and the acrylic resin has a hydroxyl value of from about 5 to about 110 milligrams potassium hydroxide per gram of acrylic resin. The catalyst includes a sulfonic acid, and the catalyst blocker includes an amine with a boiling point of about 300 degrees Celsius or higher.

## Description

### TECHNICAL FIELD

The technical field generally relates to coating compositions, and methods for producing cured coatings. More particularly, the technical field relates to coating compositions with a leather-like surface when cured, and methods for producing a cured coating with a leatherlike texture on the exterior surface of the coating.

### BACKGROUND

Many substrates are coated to provide a protective cover with an attractive appearance. Different consumers desire different appearances, such as varying colors, glossiness, depth, etc. One type of desired coating has a "leatherlike" appearance, sometimes referred to as a leatherette coating, where the exterior surface of the coating has a texture similar to that of leather.

Leatherette coatings are typically formed on substrates by depositing a powder coating that requires a high temperature cure. The cure temperature for typical leatherette powder coatings is above the melting point of many plastic substrates, such as thermoplastic polyolefins (TPO), acrylonitrile butadiene styrene (ABS), polycarbonate, and other thermoplastic substrates. Accordingly, some plastic substrates cannot be produced with a leatherette texture because the substrate will melt during the cure process. Therefore, motor vehicles, four wheelers, and various other articles that include substrates with the low melting point plastics can only have the leatherette textured surface on the portions of the article that are not plastic. However, plastic substrates may be used in combination with metallic substrates in motor vehicles and various other articles. Many customers would prefer to have the leatherette textured surface on both the plastic and metallic components for a consistent appearance.

Some commercial coatings can produce a "micro-wrinkling" appearance, but this is different from a leatherette appearance. Furthermore, these commercial coatings are not available as high-gloss products, perhaps because of the inorganic pigments utilized. The commercial coatings also require a very high film thickness, which increases cost and weight.

Accordingly, coating compositions and methods of producing a cured coating with a leatherlike leatherette texture with a low temperature for the cure are desired. Plastic articles with a leatherette textured coating are also desired. Furthermore, other desirable features and characteristics will become apparent from the subsequent detailed description and the appended claims, taken in conjunction with this background.

### BRIEF SUMMARY

Coating compositions, methods of producing a cured coating, and articles with a cured coating are provided. In an exemplary embodiment, a coating composition includes a crosslinking agent, an acrylic resin, a catalyst, and a catalyst blocker that blocks the catalyst. The crosslinking agent includes an alkylated melamine, and the acrylic resin has a hydroxyl value of from about 5 to about 110 milligrams potassium hydroxide per gram of acrylic resin. The catalyst includes a sulfonic acid, and the catalyst blocker includes an amine with a boiling point of about 300 degrees Celsius or higher.

A method of producing a cured coating is provided in another embodiment. The method includes coating a substrate with a coating composition, and curing the coating composition to form the cured coating by baking at a bake temperature of from about 100 to about 160 degrees Celsius. The coating composition includes a crosslinking agent, an acrylic resin, a catalyst, and a catalyst blocker. The crosslinking agent includes an alkylated melamine, and the acrylic resin has a hydroxyl value of from about 5 to about 110 milligrams potassium hydroxide per gram of acrylic resin. The catalyst includes a sulfonic acid, and the catalyst blocker includes an amine with a boiling point of about 300 degrees Celsius or higher.

An article coated with a cured coating is provided in yet another embodiment. The article has a substrate that includes a thermoplastic polymer with a melting point of from about 120 to about 300 degrees Celsius. A cured coating overlies the substrate, and includes a polymer formed from monomers that include an alkylated melamine and an acrylic resin. The cured coating has a top surface with a leatherlike texture defined by a cured coating thickness that varies by at least about 5 microns over a distance of 10 millimeters to produce a cured coating bump. The 10 millimeter distance is perpendicular to the cured coating thickness. The cured coating has about 10 or more cured coating bumps that are discrete from each other within an area of about 25 square millimeters.

### BRIEF DESCRIPTION OF THE DRAWINGS

The present disclosure will hereinafter be described in conjunction with the following drawing figures, wherein like numerals denote like elements, and wherein:
FIG. 1 is a side sectional view of a substrate with a coating having a leatherette texture; and
FIG. 2 is perspective sectional view of a substrate with a coating having a leatherette texture.

### DETAILED DESCRIPTION

The following detailed description is merely exemplary in nature and is not intended to limit the application or uses of the embodiment described. Furthermore, there is no intention to be bound by any theory presented in the preceding technical field, background, brief summary, or the following detailed description.

It has been discovered that, in accordance with an exemplary embodiment, an acrylic resin combined with a melamine crosslinking agent and a catalyst can be used to produce a coating composition that exhibits a leatherette texture when subjected to a low temperature cure. The catalyst may be an acid catalyst, such as a sulfonic acid catalyst. It has been discovered that when the sulfonic acid catalyst is blocked with an amine, where the amine has a boiling point of about 300 degrees Celsius (°C) or higher, the coating composition can be cured at a bake temperature of from about 100 to about 160 °C to produce a cured coating with a leatherette texture on its external surface.

In accordance with an exemplary embodiment, a coating composition includes an acrylic resin, a crosslinking agent, and a catalyst. The acrylic resin comprises hydroxyl moieties that serve as reaction sites for the crosslinking agent. In an exemplary embodiment, the acrylic resin has a hydroxyl value of from about 5 to about 110 milligrams potassium hydroxide per gram of the acrylic resin (mg KOH/g). In alternate embodiments, the acrylic resin has a hydroxyl value of from about 20 to about 80 mg KOH/g, or from about 40 to about 60 mg KOH/g.

The acrylic resin may be formed from one or more monomers, so the acrylic resin may be a homopolymer, a copolymer, or a polymer formed from more than two monomers. The acrylic resin may be a block polymer in some embodiments, but the acrylic resin may be a graft polymer, a random polymer, or other types of polymers in other embodiments. In an exemplary embodiment, the acrylic resin includes, but is not limited to, one or more the following monomers: acrylic acid, methacrylic acid, methyl methacrylate, butyl acrylate, hydroxy ethyl acrylate, hydroxy ethyl methacrylate, hydroxy propyl acrylate, hydroxy butyl acrylate, hydroxy butyl methacrylate, styrene, styrene methyl methacrylate, glycidyl acrylate, glycidyl methacrylate, other oligomeric acrylates, and other oligomeric methacrylates.

In an exemplary embodiment, the acrylic resin is made from the monomers styrene methyl methacrylate, butyl acrylate, hydroxy ethyl acrylate, and acetic acid. In an exemplary embodiment, the acrylic resin is made from about 20-40 weight percent styrene methyl methacrylate, about 15-25 weight percent butyl acrylate, about 30-50 weight percent hydroxy ethyl methacrylate, and about 1 to about 4 weight percent acetic acid, all based on a total weight of the acrylic resin. In an exemplary embodiment, the acrylic resin has a weight average molecular weight of from about 100,000 Daltons to about 2,000,000 Daltons. In an exemplary embodiment, the coating composition includes the acrylic resin in an amount of from about 40 to about 80 weight percent, based on a total weight of the coating composition. However, in alternate embodiments the coating composition may include the acrylic resin in an amount of from about 50 to about 70 weight percent, or in an amount of from about 50 to about 60 weight percent, also based on the total weight of the coating composition.

The crosslinking agent comprises a melamine compound in an exemplary embodiment. The melamine compound may be a melamine formaldehyde resin which may be fully or partially alkylated. In some embodiments, the melamine formaldehyde resin may be alkylated with one or more of a methyl, ethyl, propyl, butyl, pentyl, or hexyl group. The melamine formaldehyde resins may be alkylated with alkyl hydroxides having from 1 to 6 carbons in some embodiments. The crosslinking agent may have a degree of polymerization (DP) of from 1 to about 3 in an exemplary embodiment. As such, the crosslinking agent may have a relatively low molecular weight, such as a weight average molecular weight of from about 390 to about 2,000 Daltons, or from about 390 to about 1,000 Daltons in an alternate embodiment. In one embodiment, the crosslinking agent may comprise n-butyl/methylated melamine formaldehyde, with about an even number of butylated groups and methylated groups. However, it is also possible to use other alkylated melamine formaldehyde crosslinking agents in alternate embodiments. Other possible crosslinking agents that may optionally be included or used include urea formaldehyde, benzoguanamine formaldehyde, and polyisocyanates.

In an exemplary embodiment, the catalyst is an acid catalyst that enhances crosslinking of the acrylic resin and the crosslinking agent. The acid catalyst may be a sulfonic acid, such as an aromatic sulfonic acid, where the sulfonic acid is blocked in the coating composition before catalyzing the acrylic acid/crosslinking agent reaction. An exemplary catalyst is dodecyl benzene sulfonic acid, but other aromatic sulfonic acids that may be utilized as the catalyst include, but are not limited to, para toluene sulfonic acid, decyl benzene sulfonic acid, dinonylnaphthalenesulfonic acid, and combinations thereof.

The catalyst in the coating composition is blocked with a catalyst blocker, as mentioned above. The catalyst blocker is an amine that has a boiling point of about 300 °C or higher. Upon heating, the catalyst and the catalyst blocker are separated, and the catalyst serves to catalyze the reaction between the acrylic resin and the crosslinking agent. Catalyst blockers that may be utilized include, but are not limited to, triethanol amine, 2-Bis(2-hydroxyethyl)amino-2-(hydroxymethyl)-1,3-propanediol, a tertiary amine ethoxylate, and combinations thereof.

Without being bound by theory, it is believed that the leather-like texture of the exterior surface of the cured coating composition may result from the strong interaction between the acid catalyst and the high boiling amine catalyst blocker. Because of the strong interaction between the acid and the amine, the amine evaporates at an air/coating interface faster than at the bottom of the coating. Therefore, at the air/coating interface the crosslinking reaction between the crosslinking agent and acrylic resin proceeds faster than at the bottom. This may create stress that results in a leather-like appearance. The high boiling point of the amine catalyst blocker allows a sufficient rate of crosslinking agent migration from the bottom to the air/coating interface throughout the cure, which may further enhance the leather-like texture.

The coating composition may include the crosslinking agent, the acrylic resin, the catalyst, and the catalyst blocker in prescribed percentages. For example, the coating composition may include the crosslinking agent in an amount of from about 5 to about 15 weight percent, the acrylic resin in an amount of from about 40 to about 85 weight percent, and the combined catalyst and catalyst blocker in an amount of from about 0.1 to about 3 weight percent, all based on the total weight of the coating composition. In an alternate embodiment, the coating composition may include the crosslinking agent in an amount of from about 10 to about 14 weight percent, the acrylic resin in an amount of from about 50 to about 80 weight percent, and the combined catalyst and catalyst blocker in an amount of from about 1 to about 3 weight percent, all based on the total weight of the coating composition.

The coating composition may include other components as well. For example, the acrylic resin may include a first acrylic resin and a second acrylic resin different than the first acrylic resin. The first acrylic resin may be formed from one or more of the monomers acrylic acid, methyl methacrylate, butyl acrylate, hydroxy ethyl acrylate, and styrene, and the second acrylic resin may be formed from one or more monomers selected from styrene, butyl methacrylate, butyl acrylate, hydroxy ethyl acrylate, hydroxy ethyl methacrylate, hydroxy propyl acrylate, hydroxy propyl methacrylate, acrylic acid, ethyl methacrylate, and glycidyl methacrylate. The first acrylic resin may be present in the coating composition in an amount of from about 1.5 to about 2.5 times the amount of the second acrylic resin present in the coating composition. In some embodiments, the use of two different acrylic resins provides a more favorable balance of sag resistance, appearance, and coating hardness, as compared to the use of a single type of acrylic resin.

The coating composition may include a variety of solvents, and in some embodiments the coating composition is a solvent born coating such that water is absent from the coating composition. As used herein, the coating composition being "absent" of water means the coating composition includes water in an amount of from 0 to about 2 weight percent, or from 0 to about 0.5 weight percent, based on the total weight of the coating composition. A wide variety of organic solvents may be used, and the solvents may be present in the coating composition in an amount of from about 10 to about 50 weight percent, based on the total weight of the coating composition.

The coating composition may include a pigment in some embodiments, such that the coating composition is a color coat. However, in alternate embodiments the coating composition is free of a pigment such that the coating composition may be used as a clear coat. "Free of a pigment," as used herein, means the coating composition includes a pigment in an amount of from 0 to about 0.1 weight percent, based on a total weight of the coating composition.

The coating composition may also include other ingredients in some embodiments. For example, the coating composition may contain additional components such as sag control agents, pigments, fillers, surfactants, rheology agents, anti-foaming agents, wetting agents, drying agents, light protecting agents, thickening agents, UV light absorbing agents, antioxidants, flow and leveling agents, and other additives typically used in coatings. Such components may be included in quantities known to a person skilled in the art. In general, these other compounds may optionally be present in the coating composition in amounts ranging from 0 to about 10 weight percent, based on the total weight of the coating composition.

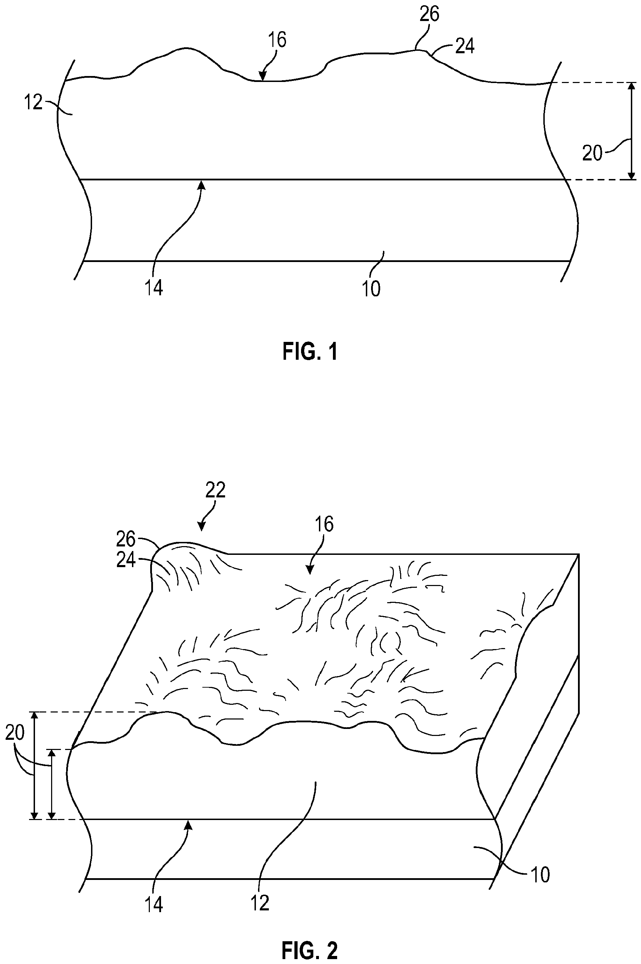

In accordance with another exemplary embodiment, a method for producing a cured coating is provided herein with reference to FIGS. 1 and 2. A coating composition comprising an acrylic resin, a crosslinking agent, a catalyst, and a catalyst blocker that blocks the catalyst, as described above, is applied to a substrate **10,** where the coating composition is cured to form a cured coating **12.** In an exemplary embodiment, the substrate **10** is thermoplastic and has a melting point of from about 120 °C to about 300 °C. However, in alternate embodiments the substrate **10** has a melting point of from about 150 °C to about 250 °C, or from about 160 °C to about 220 °C. In other embodiments, however, the substrate has melting points greater than about 250C. The substrate **10** may be a component of a motor vehicle in some embodiments, but the substrate **10** may be used for other purposes in alternate embodiments.

In another embodiment, the coating composition is applied to the substrate **10.** The coating composition may be applied to the substrate **10** using any known technique, such as spraying, rolling, dipping, brushing, knife coating, etc. Once applied, the coating composition is cured to form the cured coating **12** by heating, or baking, the coating composition at a bake temperature of from about 100 °C to about 250 °C for a bake period. In alternate embodiments, the bake temperature is from about 100 °C to about 200 °C, or from about 100 °C to about 160 °C. The bake period depends on the bake temperature, where higher bake temperatures can produce a cured coating **12** in a shorter bake period. In an exemplary embodiment, the bake period is from about 2 minutes to about 2 hours, but in alternate embodiments the bake period is from about 3 minutes to about 1 hour, or from about 4 minutes to about 30 minutes, or from about 4 minutes to about 15 minutes. The term "cured" indicates the acrylic resin is about 80% to 100% crosslinked, and about 80% to 100% of the solvent originally in the coating composition has evaporated or otherwise been removed from the cured coating **12.**

The cured coating **12** has a bottom surface **14** and a top surface **16,** where the bottom surface **14** is closer to the substrate **10** than the top surface **16.** The bottom surface **14** may directly contact the substrate **10** in some embodiments, but a primer layer (not illustrated) or other layer may be positioned between the cured coating **12** and the substrate **10** in alternate embodiments. The cured coating **12** has a cured coating thickness **20** that varies along the top surface **16** to produce a leatherlike texture **22.** The cured coating thickness **20** is from about 20 to about 400 microns thick in an exemplary embodiment, but in alternate embodiments the cured coating thickness is from about 20 to about 200 microns thick, or from about 20 to about 100 microns thick.

The bottom surface **14** may not have a leatherlike texture, because it is adjacent to the substrate **10** or to a coating or other layer positioned between the cured coating **12** and the substrate **10** that does not have a leatherlike texture. However, it is possible that the bottom surface **14** does have a leatherlike texture because it is positioned adjacent to something that has a leatherlike texture. However, the top surface **16** generally has a different texture than the bottom surface. For example, if the bottom surface **14** has a leatherlike texture, the top surface **16** will have a different leatherlike texture because the cured coating thickness **20** varies from one position to another.

The leatherlike texture is defined by the cured coating thickness **20** that varies by at least about 5 microns or more over a distance along the top surface **16** of about 10 millimeters to produce a cured coating bump **24.** The at least 5 micron difference in the cured coating thickness is measured from an apex **26** of the cured coating bump **24.** The distance of about 10 millimeters is perpendicular to the cured coating thickness **20,** and the cured coating bump **24** is defined by a reduction in the cured coating thickness around the entire perimeter of the cured coating bump **24** such that different cured coating bumps **24** are discrete from each other and completely separated by the cured coating **12** having a cured coating thickness **20** of at least about 5 microns less than that at the apex of the cured coating bump **24.** The leatherlike texture is further defined by about 10 cured coating bumps **24** that are discrete from each other within an area of about 25 square millimeters of the top surface **16.** The cured coating bumps **24** may be symmetrical in some embodiments, but the cured coating bumps **24** may not be symmetrical in other embodiments. The leatherlike texture **22** is differentiated from a ridged texture by the discrete nature of the cured coating bumps **24,** and the number of discrete cured coating bumps **24** within a given area.

The cured coating 12 can be produced with a high gloss in some embodiments. For example, the cured coating may have a gloss value of about 80 gloss units (GU) or greater at a 60 degree angle. The glossy, leatherlike appearance of the cured coating **12** provides an attractive surface on a substrate **10** with a low melting point that allows greater consumer choices and options.

### EXAMPLES

A blocked catalyst was produced in the following manner. 221.69 parts by weight methanol and 376.15 parts by weight of Dodecyl benzene sulfonic acid solution (70% solution in isopropanol) and than another 37.6 parts by weight of methanol were charged to a reactor equipped with a stirrer and a water cooling jacket. These components were mixed for 20 minutes. 19.74 parts by weight of triethanol amine was added to the reactor and mixed for 20 minutes while maintaining the temperature at 50 °C. Another 19.74 parts by weight of triethanol amine was added to the reactor and mixed for 20 minutes while maintaining the temperature at 50 °C. A third portion of 19.74 parts by weight of triethanol amine was added to the reactor and mixed for 20 minutes while maintaining the temperature at 50 °C. A fourth portion of 19.74 parts by weight of triethanol amine was added to reactor and mixed 1 hour while maintaining the temperature at 50 °C. The resulting solution had a solids content of about 45% triethanol amine blocked dodecyl sulfonic acid.

An example color coating composition was prepared with the ingredients listed below in Table 1.

**TABLE 1**

| Component | Parts by weight |
|---|---|
| fully alkylated melamine formaldehyde¹ | 12.0 |
| Acrylic resin solution² | 52.0 |
| Light absorber³ | 1.0 |
| Methyl amyl Ketone | 9.0 |
| Nonaqueous Acrylic Resin⁴ | 29.0 |
| Acrylic polymer flow and leveling agent⁵ | 0.5 |
| Triethanolamine blocked dodecylbenzene sulfonic acid | 2.0 |
| Black pigment⁶ | 9.0 |

| | |
|---|---|
| 1. Resimine CE-4515, from PREFERE^{®} Inc. 2. 60% solution of acrylic polymer of styrene/methyl methacrylate/butyl acrylate/hydroxy ethyl acrylate/acrylic acid (S/MMA/BA/HEA/AA) in a ratio of 30/18.5/40/1.5 in a mixture of hydrocarbon solvents. 3. TINUVIN^{®} 328 4. 60% solution of acrylic polymer of styrene/butyl methacrylate/butyl acrylate/hydroxy ethyl acrylate/acrylic acid/methyl methacrylate/glycidyl methacrylate/methyl acrylate in a ratio of about 9/43/11/20/1/5/0.3/12 in a mixture of non-aqueous solvents. 5. Resiflow^{®} S, from Estron Chemical 6. D-108^{®}, from Axalta^{®} | |

The coating composition from Table 1 was sprayed onto primer coated phosphatized steel panels. The panels were baked at 115 °C for 20 min. The dry film had an average thickness was 50 microns. The coating had leather-like texture with a black color and a gloss of 83 GU measured at a 60-degree angle.

An example clear coating composition was prepared with the ingredients listed below in Table 2.

**TABLE 2**

| Component | Parts by weight |
|---|---|
| fully alkylated melamine formaldehyde¹ | 12.0 |
| Acrylic resin solution² | 50.0 |
| Light absorber³ | 1.0 |
| Light absorber⁴ | 0.5 |
| Methyl amyl Ketone | 9.0 |
| Nonaqueous Acrylic Resin⁵ | 29.0 |
| Polyacrylate flow and leveling agent⁶ | 0.5 |
| Triethanolamine blocked dodecylbenzene sulfonic acid | 2.0 |

| | |
|---|---|
| 1. Cymel^{®} 303 LF, from Allnex^{®}. 2. 60% solution of acrylic polymer of styrene/methyl methacrylate/butyl acrylate/hydroxy ethyl acrylate/acrylic acid (S/MMA/BA/HEA/AA) in a ratio of 30/18.5/40/1.5 in a mixture of hydrocarbon solvents. 3. TINUVIN^{®} 328 4. TINUVIN^{®} 123 5. 60% solution of acrylic polymer of styrene/butyl methacrylate/butyl acrylate/hydroxy ethyl acrylate/acrylic acid/methyl methacrylate/glycidyl methacrylate/methyl acrylate in a ratio of about 9/43/11/20/1/5/0.3/12 in a mixture of non-aqueous solvents. 6. Byk^{®} 361N, from Byk^{®} Chemiel | |

The coating composition from Table 2 was sprayed onto black electrocoated steel panels (PPG Powercron^{®} 590). The panels were baked at 115 °C for 20 min. The dry film had an average thickness of 50 microns. The cured coating had a leather-like texture in a clear coat with a gloss of 82 GU measured at a 60-degree angle. The cured coating appeared black because it was cured on a black substrate.

The following are examples of possible embodiments of the invention: -
Embodiment #1: A coating composition comprising:
   a crosslinking agent, wherein the crosslinking agent comprises an alkylated melamine;
   an acrylic resin, wherein the acrylic resin has a hydroxyl value of from about 5 to about 110 milligrams potassium hydroxide per gram of the acrylic resin (mg KOH/g);
   a catalyst, wherein the catalyst comprises a sulfonic acid; and
   a catalyst blocker that blocks the catalyst, wherein the catalyst blocker comprises an amine, and wherein the amine has a boiling point of about 300 degrees Celsius or higher.
Embodiment #2: The coating composition of Embodiment #1, wherein the catalyst is an aromatic sulfonic acid.
Embodiment #3: The coating composition of Embodiment #1 or Embodiment #2 wherein the catalyst is selected from the group of dodecylbenzene sulfonic acid, toluene sulfonic acid, decyl benzene sulfonic acid, dinonylnaphthalenesulfonic acid, and combinations thereof.
Embodiment #4: The coating composition of any one of Embodiments #1 to #3, wherein the catalyst blocker is selected from the group of triethanol amine, 2-Bis(2-hydroxyethyl)amino-2-(hydroxymethyl)-1,3-propanediol, a tertiary amine ethoxylate, and combinations thereof.
Embodiment #5: The coating composition of any one of Embodiments #1 to #4, wherein the crosslinking agent is present in the coating composition in an amount of from about 5 to about 15 weight percent, based on a total weight of the coating composition.
Embodiment #6: The coating composition of any one of Embodiments #1 to #5, wherein the acrylic resin is present in the coating composition in an amount of from about 40 to about 85 weight percent, based on a total weight of the coating composition.
Embodiment #7: The coating composition of any one of Embodiments #1 to #6, wherein the catalyst is present in the coating composition in an amount of from about 0.1 to about 3 weight percent, based on a total weight of the coating composition.
Embodiment #8: The coating composition of any one of Embodiments #1 to #7, wherein the acrylic resin comprises a first acrylic resin and a second acrylic resin different from the first acrylic resin.
Embodiment #9: The coating composition of Embodiment #8, wherein the first acrylic resin is formed from monomers comprising acrylic acid, methyl methacrylate, butyl acrylate, hydroxy ethyl acrylate, and styrene.
Embodiment #10: The coating composition of any one of Embodiments #1 to #9, wherein the coating composition is free of water such that a water concentration in the coating composition is from 0 to about 1 weight percent, based on a total weight of the coating composition.
Embodiment #11: A method of producing a cured coating, the method comprising the steps of:
   coating a substrate with a coating composition, wherein the coating composition comprises a crosslinking agent, an acrylic resin, a catalyst, and a catalyst blocker that blocks the catalyst, wherein the crosslinking agent comprises an alkylated melamine, the acrylic resin has a hydroxyl value of from about 5 to about 110 milligrams potassium hydroxide per gram of the acrylic resin (mg KOH/g), the catalyst comprises a sulfonic acid, and wherein the catalyst blocker comprises an amine with a boiling point of about 300 degrees Celsius or higher; and
   curing the coating composition to form the cured coating by baking at a bake temperature of from about 100 to about 160 degrees Celsius.
Embodiment #12: The method of Embodiment #11, wherein curing the coating composition comprises forming the cured coating with a top surface having a leatherlike texture, wherein the leatherlike texture is defined by a cured coating thickness that varies by at least about 5 microns over a distance of about 10 millimeters to produce a cured coating bump, wherein the distance of about 10 millimeters is perpendicular to the cured coating thickness, and wherein the cured coating comprises about 10 or more of the cured coating bumps that are discrete from each other within an area of about 25 square millimeters.
Embodiment #13: The method of Embodiment #11 or Embodiment #12, wherein curing the coating composition comprises forming the cured coating with a gloss value of about 80 gloss units (GU) or greater at a 60 degree angle.
Embodiment #14: The method of any one of Embodiments #11 to #13, wherein coating the substrate comprises forming a layer that produces the cured coating with a cured coating thickness of from about 20 microns to about 400 microns.
Embodiment #15: The method of any one of Embodiments #11 to #14, wherein coating the substrate comprises coating a thermoplastic substrate having a melting point of from about 120 to about 300 degrees Celsius.
Embodiment #16: The method of any one of Embodiments #11 to #15, wherein the coating composition is free of water, such that a water concentration in the coating composition is from 0 to about 1 weight percent, based on a total weight of the coating composition.
Embodiment #17: The method of any one of Embodiments #11 to #16, wherein curing the coating composition comprises baking at the bake temperature for a bake period of from about 3 minutes to about 1 hour.
Embodiment #18: An article comprising:
   a substrate, wherein the substrate comprises a thermoplastic polymer having a melting point of from about 120 to about 300 degrees Celsius; and
   a cured coating overlying the substrate, wherein the cured coating comprises a polymer formed from monomers comprising an alkylated melamine and an acrylic resin, and where the cured coating has a top surface with a leatherlike texture, wherein the leatherlike texture is defined by a cured coating thickness that varies by at least about 5 microns over a distance of about 10 millimeters to produce a cured coating bump, wherein the distance of about 10 millimeters is perpendicular to the cured coating thickness, and wherein the cured coating comprises about 10 or more of the cured coating bumps that are discrete from each other within an area of about 25 square millimeters.
Embodiment #19: The article of Embodiment #18, wherein the cured coating has a gloss value of about 80 gloss units (GU) or greater at a 60 degree angle.
Embodiment #20: The article of Embodiment #18 or Embodiment #19, wherein the cured coating thickness is from about 20 microns to about 400 microns.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

## Claims

1. A coating composition comprising:
a crosslinking agent, wherein the crosslinking agent comprises an alkylated melamine;
an acrylic resin, wherein the acrylic resin has a hydroxyl value of from about 5 to about 110 milligrams potassium hydroxide per gram of the acrylic resin (mg KOH/g);
a catalyst, wherein the catalyst comprises a sulfonic acid; and
a catalyst blocker that blocks the catalyst, wherein the catalyst blocker comprises an amine, and wherein the amine has a boiling point of about 300 degrees Celsius or higher.

2. The coating composition of claim 1, wherein the catalyst is an aromatic sulfonic acid, preferably selected from the group of dodecylbenzene sulfonic acid, toluene sulfonic acid, decyl benzene sulfonic acid, dinonylnaphthalenesulfonic acid, and combinations thereof.

3. The coating composition of claim 1 or claim 2, wherein the catalyst blocker is selected from the group of triethanol amine, 2-Bis(2-hydroxyethyl)amino-2-(hydroxymethyl)-1,3-propanediol, a tertiary amine ethoxylate, and combinations thereof.

4. The coating composition of any one of claims 1-3, wherein the crosslinking agent is present in the coating composition in an amount of from about 5 to about 15 weight percent, based on a total weight of the coating composition and/or the acrylic resin is present in the coating composition in an amount of from about 40 to about 85 weight percent, based on a total weight of the coating composition.

5. The coating composition of any one of claims 1-4, wherein the catalyst is present in the coating composition in an amount of from about 0.1 to about 3 weight percent, based on a total weight of the coating composition.

6. The coating composition of any one of claims 1-5, wherein the acrylic resin comprises a first acrylic resin and a second acrylic resin different from the first acrylic resin, and optionally, the first acrylic resin is formed from monomers comprising acrylic acid, methyl methacrylate, butyl acrylate, hydroxy ethyl acrylate, and styrene.

7. A method of producing a cured coating, the method comprising the steps of:
coating a substrate with a coating composition, wherein the coating composition comprises a crosslinking agent, an acrylic resin, a catalyst, and a catalyst blocker that blocks the catalyst, wherein the crosslinking agent comprises an alkylated melamine, the acrylic resin has a hydroxyl value of from about 5 to about 110 milligrams potassium hydroxide per gram of the acrylic resin (mg KOH/g), the catalyst comprises a sulfonic acid, and wherein the catalyst blocker comprises an amine with a boiling point of about 300 degrees Celsius or higher; and
curing the coating composition to form the cured coating by baking at a bake temperature of from about 100 to about 160 degrees Celsius.

8. The method of claim 7, wherein curing the coating composition comprises forming the cured coating with a top surface having a leatherlike texture, wherein the leatherlike texture is defined by a cured coating thickness that varies by at least about 5 microns over a distance of about 10 millimeters to produce a cured coating bump, wherein the distance of about 10 millimeters is perpendicular to the cured coating thickness, and wherein the cured coating comprises about 10 or more of the cured coating bumps that are discrete from each other within an area of about 25 square millimeters.

9. The method of claim 7 or claim 8, wherein curing the coating composition comprises forming the cured coating with a gloss value of about 80 gloss units (GU) or greater at a 60 degree angle.

10. The method of any one of claims 7-9, wherein coating the substrate comprises forming a layer that produces the cured coating with a cured coating thickness of from about 20 microns to about 400 microns.

11. The method of any one of claims 7-10, wherein coating the substrate comprises coating a thermoplastic substrate having a melting point of from about 120 to about 300 degrees Celsius.

12. The method of any one of claims 7-11, or the coating composition of any one of claims 1-6, wherein the coating composition is free of water, such that a water concentration in the coating composition is from 0 to about 1 weight percent, based on a total weight of the coating composition.

13. The method of any one of claims 7-12, wherein curing the coating composition comprises baking at the bake temperature for a bake period of from about 3 minutes to about 1 hour.

14. An article comprising:
a substrate, wherein the substrate comprises a thermoplastic polymer having a melting point of from about 120 to about 300 degrees Celsius; and
a cured coating overlying the substrate, wherein the cured coating comprises a polymer formed from monomers comprising an alkylated melamine and an acrylic resin, and where the cured coating has a top surface with a leatherlike texture, wherein the leatherlike texture is defined by a cured coating thickness that varies by at least about 5 microns over a distance of about 10 millimeters to produce a cured coating bump, wherein the distance of about 10 millimeters is perpendicular to the cured coating thickness, and wherein the cured coating comprises about 10 or more of the cured coating bumps that are discrete from each other within an area of about 25 square millimeters.

15. The article of claim 14, wherein the cured coating has a gloss value of about 80 gloss units (GU) or greater at a 60 degree angle and/or the cured coating thickness is from about 20 microns to about 400 microns.
